Europäisches Patentamt

European Patent Office

Office européen des brevets

(11) Publication number: **0 132 057**
**A1**

# (12) EUROPEAN PATENT APPLICATION

(21) Application number: **84304174.0**

(22) Date of filing: **20.06.84**

(51) Int. Cl.⁴: **C 08 G 18/66**
**C 08 G 18/10, C 08 G 18/16**
**C 08 G 18/76, C 08 G 18/14**
**C 09 D 3/72, C 08 G 18/79**
**C 08 G 18/08**

(30) Priority: **20.06.83 US 505793**
**31.01.84 US 575677**

(43) Date of publication of application:
**23.01.85 Bulletin 85/4**

(84) Designated Contracting States:
**AT BE CH DE FR GB IT LI LU NL SE**

(71) Applicant: **THERMOCELL DEVELOPMENT, LTD.**
**P.O. Box 767**
**Knoxville, TN 37901(US)**

(72) Inventor: **Smith, Stuart B.**
**2069 Christian Circle**
**Conyers Georgia 30208(US)**

(74) Representative: **Myerscough, Philip Boyd et al,**
**J.A.Kemp & Co. 14, South Square Gray's Inn**
**London, WC1R 5EU(GB)**

(54) Method of preparing sprayable polyurethane compositions.

(57) A method of forming a sprayable polyisocyanurate composition having short cream and cure times which comprises mixing and allowing to react substantially equal volumes of an A-side component comprising a low-functionality methylene diisocyanate or a prepolymer thereof with a low-hydroxyl polyether triol and a B-side component comprising a diol, a low-hydroxyl polyether triol and a catalyst system comprising a trimerization or cream-time catalyst and a heat-activatable catalyst.

EP 0 132 057 A1

- 1 -

"METHOD OF PREPARING SPRAYABLE POLYURETHANE COMPOSITIONS"

In the past, rubbery, elastomeric-type polymers have been prepared by the reaction of an isocyanate with a diol or triol compound in the presence typically of a tin catalyst and an amine-type (Dabco) catalyst combination. The elastomeric polymer so produced generally contains mostly urethane linkages and is not fully cross-linked, and as such it tends to melt at relatively low temperatures: for example under $82^{\circ}C$ ($180^{\circ}F$). The cure time of the polymer often extends to 20 or 30 minutes, and while the ingredients may be premixed and reacted for some applications, they clearly are not suitable for use in sprayable-type applications, wherein the ingredients are sprayed onto a surface substrate as a coating or sprayed into foam form.

Reaction-injection molding (RIM) techniques have been employed to prepare cured urethane compositions and typically comprise reacting a polyisocyanate component with a polyol component within a nozzle and into an open-mold cavity. However, known RIM urethane compositions are not suitable for use in spraying operations, wherein the components of the composition are sprayed through a narrow orifice, since the spray compositions tend to pick up air and to lead to polymer breakdown, due to shearing forces in the spray nozzle. Further, sprayable compositions must be compounded, to provide for a stoichiometric reaction of the ingredients and to cure very rapidly, so that the spray compositions may be sprayed on horizontal and vertical surfaces, such as ceilings and walls, and quickly react, gel and cure.

The invention relates to a high-modulus, sprayable composition and to a method of preparing and using such composition. In particular, the invention concerns a sprayable urethane or polyisocyanurate composition suitable to be sprayed onto a surface. and which rapidly creams and cross-links into a high-modulus, flexible-type, solid or foam

- 2 -

surface coating, and to the method of preparing and spraying the composition and to the surfaces so coated.

The invention comprises a method for preparing a sprayable polymer composition which comprises mixing and reacting together substantially equal volumes of an A-side component and a B-side component, wherein the A-side component comprises a mixture of 100 to 60 parts by weight of a methylene diisocyanate having an average functionality of less than 2.4 and 0 to 40 parts by weight of a polyether triol having a hydroxyl number of less than 50 or a prepolymer having free NCO groups obtained by reacting said methylene diisocyanate and said polyether triol and the B-side component comprises a mixture of from 50 to 95 parts by weight of a polyether triol having a hydroxyl number of less than 50, 5 to 40 parts by weight of a diol and a catalyst system comprising a trimerization catalyst when the A-side component comprises a mixture of methylene diisocyanate and polyether triol or a cream-time catalyst at least when the A-side component comprises a prepolymer and a heat-activatable catalyst.

There are various embodiments of the method of the invention including:-

1.    A method for preparing a sprayable polymer composition which composition is prepared by mixing and reacting together substantially equal volumes of an A-side component and a B-side component

a) the A-side component comprising a prepolymer derived from 60 to 100 parts of a methylene diisocyanate (MDI) having an average functionality of less than 2.4 and up to 40 parts of a polyether triol having a hydroxyl number of less than 50; and

b) the B-side component comprising from 50 to 75 parts of a polyether triol having a hydroxyl number of less than 50; from 5 to 40 parts of a $C_4$ diol, and a catalytic amount of a catalyst system which comprises a metal-organo catalyst compound and a heat-activatable amine catalyst to provide a composition which has a cream time of 10 seconds or less.

2. A method of preparing a sprayable polyisocyanurate composition which composition is prepared by mixing and reacting together substantially equal volumes of an A-side component and a B-side component, the A-side component comprising 60 to 100 parts of a MDI having an average functionality of less than 2.4 and 0 to 40 parts of a polyether triol having a molecular weight of from 1000 to 6000 and a hydroxyl number of less than 50, and the B-side component comprising from 5 to 40, preferably 20 to 30, parts of diethylene glycol, 50 to 90, preferably 60 to 80, parts of a polyether triol having a molecular weight of from 1000 to 6000 and a hydroxyl number of 50 or less, a catalytic amount of a trimerization catalyst to provide for the rapid exothermic trimerization reaction of the A- and B-side components on mixing, and a catalytic amount of a heat-activatable catalyst activated at 60°C (140°F) or above to provide, on mixing and reacting, a composition which reacts within about 5 seconds, creams within about 10 seconds and is substantially cured within about 30 seconds. In this embodiment the sprayable composition preferably includes a blowing amount of a fluorocarbon blowing agent, a cell-control amount of a surfactant and a tetravalent tin catalyst, preferably in an amount of 0.1 to 3 parts by weight, to provide a cream time after mixing of less than about 10 seconds.

3. A process of preparing a sprayable polyisocyanurate composition, which composition is prepared by mixing and reacting together substantially equal volumes of an A-side component and a B-side component, the A-side component comprising 60 to 100 parts of a MDI having an average functionality of less than 2.4 and 0 to 40 parts of a polyether triol having a molecular weight of from 1000 to 6000 and a hydroxyl number of less than 50, and the B-side component comprising from 20 to 30 parts of diethylene glycol, 60 to 80 parts of a polyether triol having a molecular weight of from 1000 to 6000 and a hydroxyl number of 50 or less, a catalytic amount of a potassium octoate trimerization catalyst to provide for the rapid exothermic trimerization reaction of the A- and B-side components on mixing, and a catalytic amount of a heat-activated, diazobicycloundec-5-ene phenol-blocked salt catalyst activated at 60°C (140°F) or above to provide, on mixing and reacting, a sprayable composition.

4. A process of preparing a sprayable, foamable, polyisocyanurate composition, which composition is prepared by mxing and reacting together substantially equal volumes of an A-side component and a B-side component, the A-side component comprising 60 to 100 parts of a MDI having an average functionality of less than 2.4 and 0 to 40 parts of a polyether triol having a molecular weight of from 1000 to 6000 and a hydroxyl number of less than 50, and the B-side component comprising from 20 to 30 parts of diethylene glycol, 60 to 80 parts of a polyether triol having a molecular weight of from 1000 to 6000 and a hydroxyl number of 50 or less, a catalytic amount of a potassium octoate trimerization catalyst, to provide for the rapid exothermic trimerization reaction of the A- and B-side components on mixing, a catalytic amount of a heat-activated diazobicycloundec-5-ene phenol-blocked salt catalyst activated at 60°C (140°F) or above, a blowing amount of a fluorocarbon blowing agent, a cell-control amount of a surfactant and a tetravalent tin catalyst, to provide, on mixing and reacting, a sprayable composition.

5. A method of preparing a high-modulus, solid urethane coating, which method comprises spraying substantially equal-volume amounts of an A-side component and a B-side component together, to provide for the reaction of said components in 5 seconds or less, to produce a high-modulus, solid coating, the A-side component comprising 100 parts of a prepolymer prepared by reacting a polyether triol having a hydroxyl number of 50 or less, with a low functionality MDI having a functionality of 2.4 or less, and the B-side component comprising from 5 to 40, preferably 15 to 25, parts of a diol and from 60 to 95, preferably 70 to 90, parts of a polyether triol having a hydroxyl number of 50 or less, a catalytic amount of a catalyst system composed of a tetravalent tin salt catalyst in combination with a heat-activated polyamine catalyst, and optionally an antifoaming amount of a degassing agent.

6.    A method of preparing a high-modulus, solid, urethane coating composition, which method comprises spraying and reacting together substantial equal volumes of A- and B-side components, the A-side component comprising 100 parts by weight of a prepolymer prepared by reacting an ethylene-oxide-capped polypropylene oxide triol with a low-functionality MDI, the MDI having an average functionality of 2.0 or less, to provide a prepolymer having 20% to 22% free NCO, and the B-side component comprising from 5 to 40 parts of a diethylene diol and 60 to 95 parts of an ethylene-oxide-capped polypropylene oxide triol having a hydroxyl number of 50 or less, and a small catalytic amount of a tetravalent tin salt catalyst in combination with a heat-activated, formic-acid-blocked triethylene diamine, and an antifoaming amount of a degassing agent, the reaction to cream carried out in 5 seconds or less.

The diol may comprise a glycol, such as 1,4 butane diol, in combination with a metal-organo catalyst such as a tetravalent tin catalyst like a tetravalent tin fatty acid salt urethane catalyst.  The diol may also comprise diethylene glycol in combination with a metal-organo catalyst such as a potassium salt trimerization catalyst like a trimerization catalyst fatty acid potassium.  The triol can comprise an ethylene oxide-capped polypropylene oxide typically with a molecular weight of 1000 to 6000. The heat activated amine catalyst can comprise an acid blocked polyalkylene amine catalyst. The method includes spraying the A- and B-side components through a fixed-volume, one time, spray equipment and spraying the reactive mixture onto a substrate to provide a surface coating thereon such as wherein the substrate comprises a rigid foam board stock material. In one embodiment the invention relates to a trimer composition having elastomeric groups therein and to a method of preparing and using the trimer composition. In particular, the invention concerns a sprayable, polyisocyanurate trimer elastomeric composition suitable to be sprayed onto a surface and which rapidly creams and cross-links, and which composition may be sprayed or applied as a solid or foam composition and be adjusted easily between a rigid and flexible composition. The trimer compositions are particularly suitable for use in fixed-volume spray-type equipment, wherein the respective A- and B-side components may be mixed and sprayed in equal-volume ratios, to provide a coating or foam composition.

A high modulus, elastomeric-type trimer polyisocyanurate composition has been discovered, which trimer composition has cross-linked, elastomeric groups therein, and which trimer composition, by being cross-linked fully and rapidly, does not melt on exposure to high temperatures and open flame, but rather builds up a char and has excellent char resistance, and which composition may be adjustable through the employment of varying amounts of low-hydroxyl-number triols to range from a rigid to a flexible, cured polymer, and which may be applied in solid or foam form, and more particularly sprayed in fixed volume one-to-one spray equipment. The elastomeric trimer compositions of the invention are particularly useful in spraying substrate surface, either in solid or foam form, and particularly for spraying vertical or overhead surfaces, where rapid creaming and rapid curing of the composition are required.

In one use, the trimer composition may be employed in the preparation of a rigid foam layer, and the same or similar composition without the blowing agent employed as a coating on one or both sides of the foam layer, to provide a unique rigid-foam-board product having a sealing coating thereon of the same or similar materials. The coated board product provides for a smooth surface on the foam and yet the product will not delaminate through the difference in thermal expansion between the coating and the foam, since the product is composed of the same materials. Thus, the coating and foam composition are characterized by high melting points, good char resistance, both rapid cream and curing times, and may be applied in spray-type equipment, such as equipment which is not adjustable, but which requires equal volume or one-to-one volumes of the A- and B-side components of the reactants.

The trimer compositions of the invention comprise an A-side component containing a majority of a polyisocyanate and particularly a low functionality that is, less than 2.4 average functionality, such as from 2.0 average functionality or less, of MDI alone or in combination, with minor amounts of a low-hydroxyl-number triol, which A-side component is usually free of catalysts. The B-side component comprises the combination of a diol, typically a diethylene diol, and a low-hydroxyl-number triol, with the majority of the B-side component being a triol, to reduce the average hydroxyl number of the triol/diol B mixture to 300 or less; for example, less than 200. The amount of the triol employed, in either the A- or B-side component, may be varied, in order to control the stiffness or rigidity of the resulting cross-linked product, with more triol being added, resulting in the additional elastomeric groups between the trimer groups, to provide for more flexibility, with lower amounts of triol providing for a more rigid-type cross-linked composition. For example, polyether triols having a low hydroxyl number; for example, less than 50 and typically 30 or less, and molecular weights of 1000 to 6000, are useful in the invention, together with diethylene glycol in low amounts, which have a hydroxyl number of approximately 1100. All of the triols may be placed in the B-side, or in some formulations the triol may be mixed with the MDI and added to the A-side, to provide for additional triol in the overall reaction mixture, thereby providing for a more flexible or elastomeric-type trimer material having elastomeric properties but rapidly and fully cross-linked and with high char resistance and a high melting point.

The B-side diol/triol mixture also includes catalysts which will effect the rapid trimerization of the low-functionality MDI at a low temperature, to cause an exothermic reaction, so that, as the reaction proceeds, further catalysts, such as heat-activatable catalysts, activatable at 60 to 71°C (140°F to 160°F), are activated to promote the triol urethane elastomeric linkages between the trimer regions, thereby providing a fully cross-linked, rapidly cured, high-modulus trimer composition. Typically, the B-side component comprises a low-activated trimerization catalyst, such as a potassium salt, particularly a potassium fatty-acid salt like potassium octoate, to effect the immediate or rapid trimerization of the low-functionality MDI, on mixing of the A- and B-side components, and a rapid exotherm to 49°C (120°F) or above in generally less than 10 to 15 seconds. Where a rapid-acting trimerization catalyst is not employed; for example, if the formulation does not include potassium octoate, then the mixture of the MDI and the diol/triol in the presence of other urethane-type catalysts only provides a very slow and unsatisfactory cure, and such a formulation cannot be sprayed, particularly on vertical or overhead walls, where fast creaming and instant

- 9 -

cross-linking are desirable to retain the material in place after spraying.

Typically, the B-side component also includes a heat-activatable or a urethane-type catalyst, so that, after initial trimerization, the elastomeric groups of the triol may be secured to the trimer. The heat-activatable catalyst is not effective until a substantial or major part of the trimerization reaction has occurred. Such heat-activatable catalysts are typically amine-type catalysts and in particular may comprise a heat-activatable phenol acid-blocked salt, such as a diazobicycloundec-5-ene phenol-blocked salt which is heat-activated at about 71°C (about 160°F) or above. Generally, the heat-activatable catalyst is also employed in combination with a urethane-type catalyst, such as a metal catalyst like a tetravalent tin catalyst of a tetravalent tin fatty-acid salt. While the employment of tin urethane-type catalyst is optional, it has been found that the tin catalyst tends to come into operation at about 66°C to 71°C (about 150°F to 160°F) at about the same time as the heat-activatable acid phenol catalyst. The amount and nature of the catalyst may vary, depending upon the degree of cream time and rapidity of the cross-linking desired, but typically it is desired to obtain a substantially instantaeous cream time, after mixing and starting of the reaction, of less than 5 seconds, such as less than 3 seconds, and with the cross-linking occurring during the exothermic reaction in generally less than 20 seconds, or typically from 5 to 12 seconds. The resulting cured trimer elastomeric product should not melt and, on exposure to open flame, merely chars. The B-side component may also contain minor and low amounts of other materials, such as stabilizers like an ethanolamine, blowing agents, surfactants, modifiers and other additives.

The spraying in fixed-volume quantities of about 100 parts by volume of the A-side component of low-functionality

- 10 -

MDI with 100 parts by volume of the B-side component containing the triol/diol catalyst mixture provides for sprayed, solid, typical coating compositions, the flexibility and rigidity of which are governed by the amount of triol and MDI, and more flexible where the additional triol has been added to the A-side component with the MDI. However, it is often desired to provide for a foamable spray composition, and, in such cases, the B-side component should include a blowing amount of a blowing agent, typically a halocarbon, such as chloro-fluoro-methane or ethane, and a surfactant, such as a silicone surfactant, to provide for controlled cell size and cell formation, and, optionally, where required, an additional catalyst.

Where equal volumes of the A- and B-side components are sprayed, the addition of the blowing agent and silicone surfactant has a tendency to cool or slow slightly the reaction, and, therefore, the foamable reaction, particularly if sprayed on a vertical wall, may tend to run, unless the cream time is reduced. Therefore, it has been found often desirable to add a urethane-type catalyst or catalysts, to reduce the cream time to less than 5 seconds or substantially instantaneously. It has been found that a zinc salt catalyst is often effective, and typically a zinc fatty-acid-type catalyst, such as zinc octoate, is employed in an amount sufficient to provide for almost instant creaming, after mixing of the A- and B-side components. This addition permits the foamable spray composition to set immediately on a vertical wall or overhead wall, and therefore, to permit rapid cross-linking to take place. The employment of the zinc catalyst or other catalyst, to enhance cream time, sometimes leads to some slight delays in the curing cycle; however, even with the optional use of such zinc catalyst, the curing cycles are substantially fast; for example, less than 30 seconds and typically less than 10 seconds.

Although not wishing to be bound by any particular theory and method of operation, composition or structure, it is believed that the trimer composition of the invention comprises trimerized MDI, with elastomeric groups extending between the trimerized MDI, with the elastomeric groups being formed primarily by the triols somewhat like the spokes of a wheel, with the trimerized portion being at the hub of the wheel.

Thus, employing a trimer composition which includes a blowing agent, a generally high-density-type closed-cell, cross-linked foam having a density of 48 to 192, and more typically 96 to 144, $Kg/m^3$ (3 to 12, and more typically 6 to 9 pounds per cubic foot), may be formed, and, thereafter, by the removal of the blowing agent and the silicone surfactant, the same or a similar formulation, with triol variations, then may be sprayed, coated or otherwise applied onto one or typically both surfaces of the rigid foam, to provide a solid, sealing, coating layer over both surfaces of the foam, thereby producing a rigid foam which will not delaminate, when exposed to variations in temperature, and has no visibly observed lines of separation between the solid coating and the foam, permitting the material to be employed as a modular panel for roofing or building construction. While the trimer compositions are adapted to be sprayed, it is recognized that such compositions can be applied and used in variable and fixed spray equipment and applied and used by a variety of casting, molding, coating and layering techniques. A typical formulation of the trimer composition, subject to be used in fixed-volume spray equipment, would be as shown in Table 1.

- 12 -

## TABLE 1

### Typical Formulations

A side

| (volume is 100) | PARTS BY WEIGHT | |
| --- | --- | --- |
| | Range | Preferred Range |
| 1. MDI low functionality < 2.4; e.g. 2.0 | 100-60 | 100-70 |
| 2. Polyether triol hydroxyl number < 50; e.g. 30 MN 1000-6000; e.g. 1500-5000 | 40-0 | 30-0 |

B-side

| (volume is 100) | | |
| --- | --- | --- |
| 1. Diethylene glycol (DEG) | 5-40 | 20-30 |
| 2. Polyether triol (as above) | 50-90 | 60-80 |
| 3. Blowing agent fluorocarbon (optional) | 1-15 | 3-10 |
| 4. Trimerization catalyst (reaction mixture) potasium octoate | 0.1-5 | 0.2-2.0 |
| 5. Heat-activated catalyst (reacts above $60^{\circ}C$ ($140^{\circ}F$)) phenol amine salt | 0.01-2.0 | 0.05-0.5 |
| 6. Cream-time catalyst (to reduce cream time 15 secs. or less) tetravalent tin salt Sn octoate (optional) | 0.01-2.0 | 0.05-0.5 |
| 7. Surfactant silicone (optional) | 0.1-3.0 | 0.3-1.0 |

Reaction time on mixing - 5 seconds or less.

Cure time - 20 seconds or less; e.g. 10 or less.

Cream time - 15 seconds or less; e.g. 10 or less.

Sprayed at equal volumes A and B.

- 13 -

The reaction mixture of the invention is typically sprayed, to produce a solid or foam coating on a variety of substrates. The liquid formulation may be sprayed onto rigid polyurethane, polystyrene or polyisocyanurate foams used typically as insulation, roofing materials or other substrate-type material, such as onto glass fibers or polyester woven or nonwoven substrates, as well as directly onto paper or metal, such as aluminum foil. The cured coating composition exhibits good fire properties, in that it chars and does not melt, which provides for fire-insulating properties. The degree of rigidity or flexibility of the solid or foam coating can be controlled as described, by varying the amount of the triol and the catalyst compositions. Typically, the coating, when employed as a coating, produces a smooth, washable, surface skin, while, as a foam, it produces a fine, uniform closed-cell foam. In one method of insulation, the A- and B-side components are premixed together in an equal-volume spray nozzle directly at room temperatures, so that an exothermic curing reaction occurs, typically within 5 seconds or instantaneously on mixing. It may be desirable in some cases to preheat the substrate surface prior to the application of the reaction mixture, and particularly if a very thin, cured solid coating is desired immediately on the substrate. The coating composition may be applied for various thicknesses; for example 0.16 to 0.95 cm (1/16th to 3/8ths of an inch) thickness on rigid insulation-type foam used as insulation and roofing materials. The sprayable composition of the invention is useful particularly for spraying a coating directly on asbestos-containing materials, to seal the asbestos-containing substrate materials.

In one preferred embodiment, a rigid foam board is produced employing a blowable composition of the invention to the desired thickness, for use as a roofing panel or a side-wall panel for industrial purposes, and, thereafter, one or both foam surfaces sprayed with the same formulation, except without the silicone surfactant, blowing agent and without the cream-type catalyst, to form a thin, smooth coating on each side of the foam to seal the foam. This type of a sealed, coated foam board composed of the same composition provides typically for an inner foam layer 1.3 to 7.6 cm (0.5 to 3 inches) thick of 96 to 192 $Kg/m^3$ (6 to 12 pounds per cubic foot) closed-cell density, and with a thin coating on either side, and is used for insulation and construction purposes.

In another embodiment of the invention a method of preparing a high-modulus coating and a sprayable, high-modulus, elastomeric-type urethane composition has been discovered, which composition may be sprayed more particularly in fixed-volume one-to-one type-volume spray equipment. The compositions are particularly useful in spraying substrate surfaces to provide a unique, high-modulus, flexible coating on the surface, and which surface produces a finished surface very rapidly, generally less than 5 seconds; for example, 3 seconds or less. The sprayable coating composition rapidly cures and exhbits excellent physical properties, such as superior abrasion resistance, elongation, impact resistance, solvent resistance and dimensional stability at both low and high temperatures. The sprayable composition is particularly suitable for use in spraying the components for roofing, pipe coatings, tanks, cold storage, floors, walls and particularly overhead surfaces like ceilings, and more particularly for spraying and providing for a thin, sprayable, solid coating onto rigid foams, such as rigid polystyrene or rigid polyisocyanurate foams used as insulation.

The sprayable compositions are prepared by reacting, through spraying together under pressure, substantial equal volumes of A-side and B-side components in conventional spraying equipment. The A-side component comprises a

- 15 -

prepolymer prepared by reacting a polyether triol with a low functionality MDI. Generally, 100 parts of the prepolymer may be prepared by mixing about 25 to 35 parts, for example 30 parts, of the polyol with 65 to 75 parts, for example 70 parts, of the low-functionality MDI and reacting the components together for about 3 hours at 82°C (180°F). Typically, the prepolymer is carefully controlled as regards free NCO, and the polymer generally has from 20% to 22% free NCO. The MDI employed is typically a 4-4'diphenyl methane diisocyanate. The prepolymer employed on the A-side must be prepared from an MDI which has a low functionality, typically a functionality of less than 2.4 and generally 2.0 or less, for example 1.6 to 2.0.

The B-side component typically comprises the combination of a polyol, a catalyst system and optionally a degassing agent, to prevent or reduce the entrainment of air bubbles, due to spraying in the resulting solid coating composition. The B-side component comprises the combination of a diol, typically a diethylene diol, such as 1,4-butane diol, and a low-hydroxyl-number polyether triol, with the polyol composition generally having an average hydroxyl number of less than 200. The amount of the diol and the triol employed in the polyol composition on the B-side may vary, depending on the particular performance characteristics of the coating desired. As the amount of the polyether triol is increased in the composition, the resulting composition becomes more flexible and less stiff, while increases in the diol lead to an increase in stiffness and rigidity. It has been found that the employment of 1,4-butane diol, in combination with a polyether triol having a hydroxyl number of 50 or less, and typically a triol such as an ethoxylated propylene oxide, is a particularly useful combination. The B-side component generally comprises from 5 to 40 parts, and more typically 15 to 25 parts, of the 1,4-butane diol, in combination with from 60 to 95 parts and more typically 70 to 90 parts, of the ethylene oxide polypropylene oxide triol. The triol employed in the B-side component may be the same as or different from the triol employed in preparing the prepolymer of the A-side component.

The B-side component also comprises a catalyst system, to promote the rapid reacting and curing of the A- and B-side components or mixing and spraying. The amount of the catalyst system may vary, but generally comprises from 0.1 to 1 part, and more generally 0.01 to 0.1 part, per 100 parts by weight of the polyol in the B-side component. The catalyst combination, particularly suitable in preparing the sprayable, high-modulus, flexible compositions, comprises the combination of a tetravalent tin catalyst with an amine-type catalyst. The tetravalent tin catalyst is added to the B-side component, to provide for fast gelling time; however, the tetravalent tin catalyst does not provide a sufficient reaction time for use in sprayable compositions, wherein the reaction time must be less than 5 seconds, and typically less than 3 seconds, to cream.

The amine catalyst is generally a heat-activatable catalyst, such as an acid-blocked catalyst, generally heat-activated at about $71^{O}C$ ($160^{O}F$) or above. It has been found that a Dabco triethylene diamine catalyst, typically employed with urethane systems, is not suitable for use in these sprayable compositions, and that an acid-blocked Dabco-type catalyst is required, such as a polyalkylene polyamine, for example a triethylene diamine, which has been acid-blocked, for example with a short-chain aliphatic acid like formic acid or an aromatic acid like a phenolic acid. Such a catalyst is a delayed-action catalyst and, in combination with fatty-acid tetravalent tin salt-type catalysts, provides for the buildup of rapid gel strength, rapid reacting and curing and without the foaming which is undesirable in preparing a solid, sprayable coating. Thus, an acid-blocked diethylene diamine catalyst, normally

- 17 -

employed for delayed foaming in the preparation of urethane foams, has been found suitable for use in combination with the tetravalent tin catalyst in the spraying operation of the invention. The amounts of the tetravalent tin and the amine catalyst may be varied as desired, but in preferred embodiments are generally used in equal parts. If desired, other catalysts may be employed, however the combination of the tetravalent tin and the acid-blocked amine catalyst is essential to the spraying, to permit rapid gelling, curing and spraying of the composition.

Optionally but preferably, the B-side component also should contain degassing or antifoaming agents, in order to inhibit or prevent the formation of air bubbles in the resulting solid, sprayed coating. Typical degassing agents which may be employed include a silicone antifoamer, which reduces bubbles and gasses in the coating. The degassing or antifoaming agent is generally employed in amounts of from 0.3 to 2 parts per 100 parts by weight of the polyol in the A-side component. The A- and B-side components are typically sprayed together in generally conventional spraying equipment in about a one-to-one volume, such as in Gusmer spray equipment or Glas-Craft spray equipment. The spray conditions generally employ primary heaters at, say, 49 to $71^{\circ}C$ ($120^{\circ}F$ to $160^{\circ}F$), for example $60^{\circ}C$ ($140^{\circ}F$), with the hose temperature ranging from 60 to $71^{\circ}C$ ($140^{\circ}F$ to $160^{\circ}F$), and with a pressure employed of greater than 2.07, and typically 10.3 to 14, MPa (300 and typically 1500 to 2000, psi). The A- and B-side components are intimately mixed and exit from the nozzle and immediately react in spray form.

The invention thus provides for the spraying of A-side and B-side components together in fixed-volume, spray-type equipment employing a catalyst combination of tetravalent tin and an acid-blocked amine, and with the A-side component comprising a carefully controlled prepolymer, and which A- and B-side components on spraying provide for a very rapid

- 18 -

reaction rate, to provide a solid, high-modulus, flexible coating on the sprayed substrate.

The invention will now be described in connection with certain embodiments and formulations.

Example 1

Various trimer formulations R, RF, F and FF are set forth in Table II below.

Formulation R provided a rigid, dense, solid coating of density 1.15 Mg/m$^3$ (72 pounds per cubit foot), when sprayed onto a substrate. Formulation RF provided a high-density, rigid, closed-cell foam of density 96 to 144 Kg/m$^3$ (6-9 pounds per cubic foot). In view of the cooling effect of the blowing agent, which reduces cream time, a zinc catalyst was added to reduce cream time. Formulations F and FF contained larger amounts of triol, with some of the triol in the A-side formulation, so as to provide for a more flexible, that is rubbery-type, solid coating (F) and a more flexible, closed cell foam (FF). The combination of ingredients permitted the formulations to be sprayed, using Gusmer spray equipment, directly onto vertical walls and ceilings for coating such walls and ceilings and for coating F to be sprayed onto the surface of foam RF, to form a rigid insulation board.

0182057

- 19 -

TABLE II

Formulations

| Code Name | | 1<br>R | 2<br>RF | 3<br>F | 4<br>FF |
|---|---|---|---|---|---|
| Ingredients | | | PARTS BY WEIGHT | | |
| **A side**<br>**(no catalyst present)** | | | | | |
| 1. | MDI<br>low functionality | 100 | 100 | 70 | 70 |
| 2. | Polyether triol | | | 30 | 30 |
| **B side** | | | | | |
| 1. | Polyether triol<br>diol (DEG) | 75<br>25 | 75<br>25 | 75<br>25 | 75<br>25 |
| 2. | Trimerization catalyst<br>K octoate | 0.4 | 0.4 | 0.4 | 0.4 |
| 3. | Amine<br>stabilizer | 0.4 | 0.4 | 0.4 | 0.4 |
| 4. | Heat-activated catalyst<br>SA-L No. 1 | 0.07 | 0.07 | 0.07 | 0.07 |
| 5. | Urethane catalyst<br>UL-29 $Sn^{+4}$ | 0.05 | 0.05 | 0.05 | 0.05 |
| 6. | Blowing agent<br>F-11 | | 5.0 | | 5.0 |
| 7. | Silicone surfactant<br>L-5422 | | 1.0 | | 1.0 |
| 8. | Catalyst<br>Zn octoate (22%) | | 0.4 | | 0.4 |

Reaction times on mixing in fixed equal-volume in Gusmer spray equipment

Cure time - about 10 seconds.

Cream times - about 5 seconds or less.

1.   MDI-Mondur CD from Monsanto Company

2.   Polyether triol - Olin 32-56, Olin Corporation, MW 3000

3.   Triethanolamine

4.   SA No. 1 heat-activated acid-blocked dbu phenol salt, San-Abbott Limited, sold as catalyst for ureaformaldehyde particle boards.

5.   UL-29 - Witco Chemical Co.

6.   Trichlorofluoromethane - Freon 11

7.   L-5422 - silicone surfactant, Union Carbide Corp. or DC-197 - Dow Chemical Co.

8.   UL-32 - Witco Chemical Co.

Example 2

A high-modulus, sprayable, solid urethane coating composition of the invention was prepared employing the following formulation:

| A-side | Parts by Weight |
|---|---|
| Prepolymer (made by the reaction for 3 hours at 82°C (180°F) of 30 parts of triol E 474 polyol and 70 parts of MDI Rubicon 168 functionality about 2.0 containing 21.5% free (NCO) | 100 |
| B-side | |
| Diol 1,4-butane diol | 20 |
| Triol - ethylene-oxide-capped polypropylene oxide (hydroxyl number 35) (E-474 by Union Carbide Corp.) | 80 |
| Antifoam agent (5304 silicone of Union Carbide Corp.) | 1 |
| Catalyst - tetravalent tin salt catalyst (UL-22 Witco Chemical Co.) | 0.03 |
| Catalyst - formic acid-blocked triethylene diamine (X-8154 Air Products & Chemicals, Inc.) | 0.03 |

The A- and B-side components are about 1:1 by volume.

- 21 -

The A- and B-side components were sprayed on Gusmer spray equipment, primary heat A-side 49°C (120°F), B-side 82°C (180°F), hose temperature 71°C (160°F) and spray pressure 10.3 MPa (1500 psi). The time to cream was about 3 seoncds or less.

The physical properties of the resulting high-modulus, flexible coating as sprayed are set forth as follows:

| Property | Test Method | Results |
|---|---|---|
| Solids by weight | ASTM D 1353 | 100% |
| Theoretical coverage | | $1.2 \ dm^3/m^2$ at 1.3 mm (3 U.S. gal/100 $ft^2$ @ 50 mils) |
| Density | | |
| Component "A" | | $1.27 \ kg/dm^3$ (10.5 lbs/U.S. gallon) |
| Component "B" | | $1.12 \ kg/dm^3$ (9.3 lbs/U.S. gallon) |
| Dry time to touch | | 6 sec. |
| Cure time | | 60 sec. |
| Low-and high-temperature limitations | ASTM D 794 | -34°C to 82°C (-30°F to 180°F) |
| Tensile strength | ASTM D 638 | 16.5 MPa (2400 psi) |
| Elongation | | 400% |
| Flexural strength Method 1 | ASTM D 790 | 41 MPa (6,000 psi) |
| Modulus | | 1400 MPa (200,000 psi) |
| Gardner Impact @ 25°C (77°F) | ASTM D 3029 | 6.7 m/kg (120 in/lbs.) |
| @ -40°C (-40°F) | | 2.0 m/kg (35 in/lbs.) |

| Heat deflection @ 0.45 MPa (66 psi) | ASTM D 648 | 85°C |
|---|---|---|
| Compressive strength @ 10% deflection at failure | ASTM D 695 | 31 MPa (4500 psi) 77.57 MPa (11,250 psi) |
| Abrasion resistance | ASTM D 3884 Taber Method @ 5,000 cycles | 1.72% loss |
| Specific gravity, sprayed | | 1.12 |
| Viscosity at room temperature "A" @ 49°C (120°F) | | 0.4 Pas (400 cps) |
| "B" @ 49°C (120°F) | | 0.4 Pas (400 cps) |
| Water vapor transmission | ASTM C 355 | 2-3 perms |
| Hardness (Shore A) | ASTM D 2440 | 61 |
| Humid aging (2 weeks) | ASTM D 2126 100% RH @ 7 days @ 70°C (158°F) | 0.3% vol.change |
| Weatherometer Xenon-Arc (no water spray) | ASTM D 2565-79 1000 Hour Fadeometer exposure | No surface crazing or cracking Discoloration to dark yellow-tan |

CLAIMS

1.    A method for preparing a sprayable polymer composition
which comprises mixing and reacting together substantially
equal volumes of an A-side component and a B-side component,
wherein the A-side component comprises a mixture of 100 to 60
parts by weight of a methylene diisocyanate having an average
functionality of less than 2.4 and 0 to 40 parts by weight of
a polyether triol having a hydroxyl number of less than 50 or
a prepolymer having free NCO groups obtained by reacting said
methylene diisocyanate and said polyether triol and the B-side
component comprises a mixture of from 50 to 95 parts by weight
of a polyether triol having a hydroxyl number of less than 50,
5 to 40 parts by weight of a diol and a catalyst system
comprising a trimerization catalyst when the A-side component
comprises a mixture of methylene diisocyanate and polyether
triol or a cream-time catalyst at least when the A-side
component comprises a prepolymer and a heat-activatable
catalyst.

2.    A method according to claim 1 wherein the methylene
diisocyanate is a 4,4'-diphenylmethane diisocyanate.

3.    A method according to claim 1 or 2 wherein the methylene
diisocyanate has an average functionality of about 2 or less.

4.    A method according to claim 1, 2 or 3 wherein the A-side
component comprises a mixture of 100 to 70 parts by weight of
the methylene diisocyanate and 0 to 30 parts of the polyether
triol.

5.    A method according to claim 1, 2 or 3 wherein the A-side
component comprises a prepolymer having from 20 to 22% free
NCO groups.

6.    A method according to any one of the preceding claims
wherein the polyether triol in either or both of the A- and
B-side components has a molecular weight of 1000 to 6000.

7.    A method according to any one of the preceding clauims
wherein the polyether triol in either or both of the A- and
B-side components has a hydroxyl number of 30 or less.

8.    A process according to any one of the preceding claims
wherein the polyether triol in either or both of the A- and

- 24 -

B-side components comprises an ethylene oxide-capped polypropylene oxide.

9.   A process according to any one of the preceding claims wherein the diol is a $C_4$ diol, particularly a 1,4-butane diol.

10.   A process according to any one of the preceding claims wherein the trimerization and the heat-activatable catalysts are present in the B-side component in amounts from 0.1 to 5 parts by weight and 0.01 to 2 parts by weight, respectively.

11.   A process according to any one of the preceding claims wherein the trimerization catalyst comprises a potassium fatty acid salt, particularly potassium octoate.

12.   A method according to any one of the preceding claims wherein the cream-time catalyst comprises a tetravalent tin compound, particularly a tetravalent tin fatty acid salt.

13.   A method according to any one of the preceding claims wherein the heat-activatable catalyst comprises an amine.

14.   A method according to claim 13 wherein the amine catalyst comprises an acid-blocked polyalkylene amine, particularly a diazabicycloundec-5-ene phenol-blocked salt or formic acid-blocked triethylenediamine.

15.   A method according to any one of the preceding claims wherein the A- and B-side components are sprayed, preferably through fixed-volume spray equipment, onto a substrate, particularly a rigid foam material such as a rigid foam board stock material, to provide a surface coating thereon.

16.   A method according to any one of the preceding claims wherein the sprayable composition is rendered foamable by the incorporation therein of a fluorocarbon blowing agent, a cell-control amount of a surfactant and a tetravalent tin catalyst, preferably in an amount of 0.1 to 3 parts by weight, to provide a cream time after mixing of less than 10 seconds.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 126 741 (P.S. CARLETON et al.) <br> * columns 10-12, claims 1,2,7; column 2, line 62 - column 3, line 27; column 4, lines 62-68; column 5, lines 19-23; column 6, lines 6-16 * | 1,6,11 ,13 | C 08 G 18/66 <br> C 08 G 18/10 <br> C 08 G 18/16 <br> C 08 G 18/76 <br> C 08 G 18/14 <br> C 09 D 3/72 <br> C 08 G 18/79 <br> C 08 G 18/08 |
| X | DE-A-2 607 380 (BAYER) <br><br> * claim 1; page 7, paragraph 3; page 9, paragraph 1 - page 10, paragraph 2; page 11, paragraph 4; page 12, paragraph 1; page 13, paragraph 4 - page 14, paragraph 1; pages 17-18, example 1 * | 1-3,7- 9,11, 13,16 | |
| A | GB-A-2 084 163 (TEXACO) <br><br> * page 5, claims 1,3,5,6; page 2, lines 31-54; page 3, example 2 * | 1,6,12 ,13 | TECHNICAL FIELDS SEARCHED (Int. Cl. ³) <br><br> C 08 G <br> C 09 D |
| A | FR-A-2 307 003 (M & T CHEMICALS INC.) | | |

The present search report has been drawn up for all claims

| Place of search | Date of completion of the search | Examiner |
|---|---|---|
| THE HAGUE | 03-10-1984 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82